# EUROPEAN PATENT APPLICATION

(11) **EP 4 851 617 A1**
(43) Date of publication of application: **09.12.2026**
(21) Application number: 25867201.3
(22) Date of filing: 11.07.2025
(51) Int. Cl.: G01N 27/333

(54) **ELECTROCHEMICAL SENSOR, AND METHOD AND APPARATUS FOR MEASURING ION CONCENTRATION**

(30) Priority: 08.02.2025 CN 202510145767
(71) Applicant: Shenzhen Angel Drinking Water Industrial Group Corporation, Shenzhen, Guangdong 518107 (CN)
(72) Inventor: LEI, Jing, Shenzhen, Guangdong 518107 (CN); ZHAO, Kai, Shenzhen, Guangdong 518107 (CN); WANG, Chengcheng, Shenzhen, Guangdong 518107 (CN); LIU, Mengqi, Shenzhen, Guangdong 518107 (CN)
(74) Representative: Becker Kurig & Partner Patentanwälte mbB
(86) International application number: PCT/CN2025/108098
(87) International publication number: WO 2026/166053

(57) **Abstract**

The present application relates to an electrochemical sensor and a method and device for detecting ion concentration. The method includes: determining an ion concentration determining function corresponding to an ion-selective electrode of the electrochemical sensor, wherein the ion concentration determining function includes a relationship between an elasticity coefficient and an ion concentration; obtaining a first corresponding relationship between open-circuit voltage and time according to variations in the open-circuit voltage corresponding to the ion-selective electrode within a preset time in a solution to be measured; fitting the first corresponding relationship to determine a first fitted curve function; determining a value of the elasticity coefficient using the first fitted curve function; and calculating an ion concentration of the solution to be measured using the ion concentration determining function and the value of the elasticity coefficient. According to the solution of the present application, ion concentration data can be quickly acquired without waiting for the completion of polarization.

## Description

### Technical Field

The present application relates to the technical field of electrochemical sensors and, in particular, to an electrochemical sensor, and a method and device for detecting ion concentration.

### Background

Metal ions, such as sodium, potassium and calcium, in water are important indicators in water quality detection. The concentrations of these ions directly affect the electrolyte balance, hardness, conductivity, and other parameters of water, and have significant influences on various industries including food processing, sports physiology, household life and agricultural breeding. On-site rapid detection of ions in water makes a timely response to changes in water quality, supports environmental management and decision-making, and addresses emergencies. In the water treatment industry, on-site rapid detection can form a closed feedback regulation loop, which can improve the accuracy of water treatment and enhance the real-time performance and display of data.

At present, the main techniques for rapid on-site detection of ions include surface plasmon resonance, fluorescent probes, electrochemistry and other methods, among which electrochemical technology is the most widely used. Electrochemical measurement mainly relies on ion-selective electrodes. A sensitive membrane on an ion-selective electrode exhibits selective permeability to specific ions. When such ions pass through the membrane, a potential difference is generated at an interface between the membrane and a solution. This potential difference has a logarithmic relationship with the ion concentration in the solution, and quantitative analysis of ion concentration can be performed by measuring the potential difference between the two electrodes. Ion-selective electrodes undergo a polarization process at the initial stage of measurement, which usually lasts from tens of minutes to several hours. Concentration measurement can only be carried out after the polarization is completed and the electrode potential reaches a stable state, thus affecting the immediacy of rapid on-site electrochemical detection of ions.

The primary cause of the polarization process is that the electrode potential deviates from its theoretical value due to the imbalance of charge transfer reactions on the surface of the ion-selective electrode. Such deviation is generally associated with charge accumulation on the electrode surface, resulting in inconsistency between the measured potential and the potential predicted by the Nernst equation. Since the potential polarization process is unavoidable in actual measurement, it is difficult to reduce the time required for on-site detection, making it challenging to obtain ion concentration data within a short period.

### Summary

Based on the above, in order to address the problems in the prior art, the present application provides an electrochemical sensor and an ion concentration detection method implemented by the electrochemical sensor, which can quickly acquire ion concentration data without waiting for the completion of polarization.

According to a first aspect of the present application, there is provided a method for detecting ion concentration using an electrochemical sensor, including:
determining an ion concentration determining function corresponding to an ion-selective electrode of the electrochemical sensor, where the ion concentration determining function includes a relationship between an elasticity coefficient and an ion concentration;
obtaining a first corresponding relationship between open-circuit voltage and time according to variations in the open-circuit voltage corresponding to the ion-selective electrode within a preset time in a solution to be measured;
fitting the first corresponding relationship to determine a first fitted curve function;
determining a value of the elasticity coefficient using the first fitted curve function; and
calculating an ion concentration of the solution to be measured using the ion concentration determining function and the value of the elasticity coefficient.

According to a second aspect of the present application, there is provided an electrochemical sensor, including:
a processing unit configured to execute the method according to the first aspect.

According to a third aspect of the present application, there is provided a device for detecting ion concentration using an electrochemical sensor, including:
a first determination module configured to determine an ion concentration determining function corresponding to an ion-selective electrode of the electrochemical sensor, where the ion concentration determining function includes a relationship between an elasticity coefficient and an ion concentration;
an acquisition module configured to obtain a first corresponding relationship between open-circuit voltage and time according to variations in the open-circuit voltage corresponding to the ion-selective electrode within a preset time in a solution to be measured;
a second determination module configured to fit the first corresponding relationship to determine a first fitted curve function;
a third determination module is configured to determine a value of the elasticity coefficient using the first fitted curve function; and
a calculation module configured to calculate an ion concentration of the solution to be measured using the ion concentration determining function and the value of the elasticity coefficient.

According to the provided electrochemical sensor and method and device for detecting ion concentration, the ion-selective electrode is tested by using standard solutions of preset ion concentrations to obtain an ion concentration determining function. During actual measurement of the ion concentration in a solution to be measured, the ion concentration of the solution to be measured is determined by means of the ion concentration determining function without waiting for the completion of polarization, thereby realizing rapid acquisition of ion concentration data. The solution of the present application is applicable to all potentiometric electrochemical sensors that perform ion concentration measurement by means of an ion-selective membrane, and has universality in the field of rapid ion detection.

### Brief Description of the Drawings

To more clearly illustrate the technical solutions in the embodiments of the present application, a brief introduction to the accompanying drawings used in the description of the embodiments is given below. Obviously, the drawings described below are only some embodiments of the present application. For those of ordinary skill in the art, other drawings can be obtained based on these drawings without departing from the scope of the present application.
FIG. 1 is a schematic diagram of fitted curves fitting the relationship between open-circuit voltage and time according to an embodiment of the present application.
FIG. 2 is a schematic diagram of an ion concentration determining function curve fitting the relationship between the elasticity coefficient and the ion concentration according to an embodiment of the present application.
FIG. 3 is a schematic flow chart of a method for detecting ion concentration using an electrochemical sensor according to an embodiment of the present application.
FIG. 4 is a schematic diagram of a device for detecting ion concentration using an electrochemical sensor according to an embodiment of the present application.

### Detailed Description of Embodiments

The technical solutions in the embodiments of the present application will be clearly and completely described below with reference to the drawings in the embodiments of the present application, and it will be apparent that the embodiments described herein are merely some, not all of the embodiments of the present application. Based on the embodiments in the present application, all other embodiments obtained by those skilled in the art without involving any creative effort shall fall within the scope of the present application.

Throughout the specification and claims, terms may carry subtle meanings implied or suggested by the context, rather than meanings expressly set forth. Similarly, the phrases "in an embodiment" or "in some embodiments" as used herein do not necessarily refer to the same embodiment, and the phrases "in another embodiment" or "in other embodiments" as used herein do not necessarily refer to different embodiments. The phrases "in an implementation" or "in some implementations" as used herein do not necessarily refer to the same implementation, and the phrases "in another implementation" or "in other implementations" as used herein do not necessarily refer to different implementations. For example, the subject matter set forth includes all or some combinations of the exemplary embodiments or implementations.

Generally, terms may be understood at least in part from the context in which such terms are used. For instance, terms such as "and", "or" and "and/or" as used herein may encompass a variety of meanings, which may depend at least in part on the context in which such terms are used. Typically, the word "or" when used to associate a list, such as A, B or C, means A, B and C, here used in an inclusive sense, as well as A, B or C, here used in an exclusive sense. In addition, the terms "one or more" or "at least one" as used herein, depending at least in part on the context, may be used to describe any feature, structure, or characteristic in the singular form, or may be used to describe a combination of features, structures, and characteristics in the plural form. Similarly, terms such as "a", "an" or "the", depending at least in part on the context, may also be construed to convey singular usage or plural usage. In addition, also depending at least in part on the context, the terms "based on" or "determined by" may be understood not necessarily to refer to an exclusive set of factors, but rather to permit the presence of additional factors not expressly described.

In general, the inventive concept of the present application is as follows: An ion-selective electrode is tested using a plurality of standard solutions with preset ion concentrations, open-circuit voltage and the relationship between the open-circuit voltage and time are recorded to obtain a first ion concentration determining function, and the values of an elasticity coefficient are determined using the first ion concentration determining function. Then, an ion concentration determining function is fitted according to the relationship between the values of the elasticity coefficient and the ion concentrations. During an actual measurement of the ion concentration of a solution, the open-circuit voltage and the relationship between the open-circuit voltage and time are recorded to obtain a second ion concentration determining function, and the value of the elasticity coefficient obtained in the actual measurement process is determined using the second ion concentration determining function. Finally, the ion concentration of the solution to be measured is determined using the ion concentration determining function and the value of the elasticity coefficient obtained in the actual measurement process.

In some embodiments, the electrochemical sensor adopts a two-electrode configuration, including an ion-selective electrode and a reference electrode, where the surface of the ion-selective electrode is coated with an ion-selective membrane. In one embodiment, the ion-selective electrode is configured as a calcium ion electrode, and the reference electrode is configured as a silver chloride reference electrode. It will be appreciated by those skilled in the art that other two-electrode configurations may also be adopted, which are not limited in the present application.

In some embodiments, ion-selective electrodes prepared from the same batch of membrane solutions are sampled for test, so as to determine polarization standard curves at various ion concentrations. For example, the calcium ion electrode is tested using calcium ion standard solutions with concentrations of 1 µM, 10 µM, 100 µM, and 1 mM respectively, and an electrochemical workstation is used to record the open-circuit voltage variation curves of the calcium ion electrode within a preset time (e.g., 50 seconds) after contact with the solutions. After each round of test, the surface of the electrode may be washed with deionized water and dried at room temperature. It will be appreciated by those skilled in the art that standard solutions of other concentrations, types and quantities may also be used, and the preset time for which the ion-selective electrode is in contact with each solution may be any suitable period of time, all of which fall within the scope of the present application.

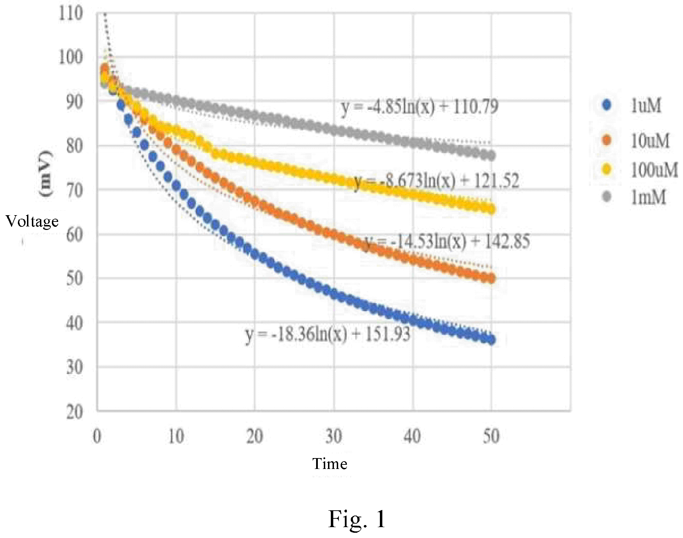

FIG. 1 is a schematic diagram of fitted curves fitting the relationship between open-circuit voltage and time according to an embodiment of the present application. As shown in FIG. 1, four curves of the relationship between open-circuit voltage and time are included. Each curve is fitted to obtain a corresponding fitted curve and a fitted curve function. In a specific embodiment, the fitted curve function may take the form of a logarithmic function Y = alnX + b, where Y represents open-circuit voltage, X represents time, a represents an elasticity coefficient (or elasticity value) of the fitted curve function, and b represents an intercept coefficient. As shown in FIG. 1, corresponding to the four curves representing the relationship between open-circuit voltage and time, the values of the elasticity coefficient a are -4.85, -8.67, -14.53, and -18.36, respectively.

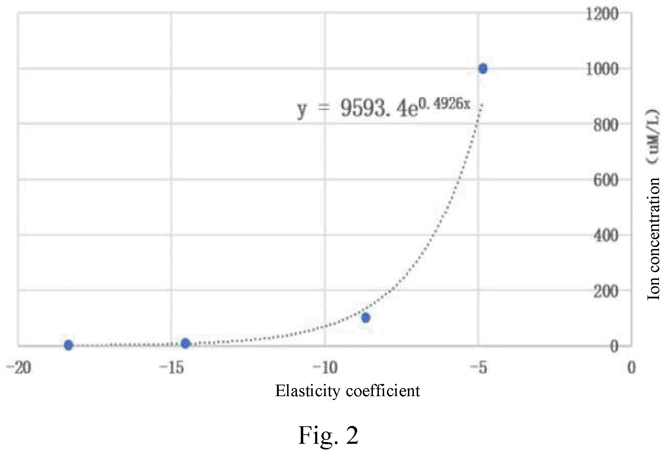

FIG. 2 is a schematic diagram of an ion concentration determining function curve fitting the relationship between the elasticity coefficient and the ion concentration according to an embodiment of the present application. In some embodiments, after determining the ion concentrations of a plurality of standard solutions and the corresponding values of the elasticity coefficient, the ion concentrations of the standard solutions and the corresponding values of the elasticity coefficients are fitted to determine the ion concentration determining function. In a specific embodiment, as shown in FIG. 2, the function obtained by fitting the ion concentrations of a plurality of standard solutions and the corresponding values of the elasticity coefficient is an exponential function.

In some implementations, after the ion concentration determining function corresponding to the ion-selective electrode is determined, when the ion-selective electrode is used to actually measure a solution with an unknown concentration, a corresponding relationship between open-circuit voltage and time may be obtained according to variations in the open-circuit voltage corresponding to the ion-selective electrode within a preset time in the solution to be measured; then, the corresponding relationship is fitted to determine a fitted curve function; the value of the elasticity coefficient is determined using the fitted curve function; finally, the ion concentration of the solution to be measured is calculated using the ion concentration determining function and the value of the elasticity coefficient.

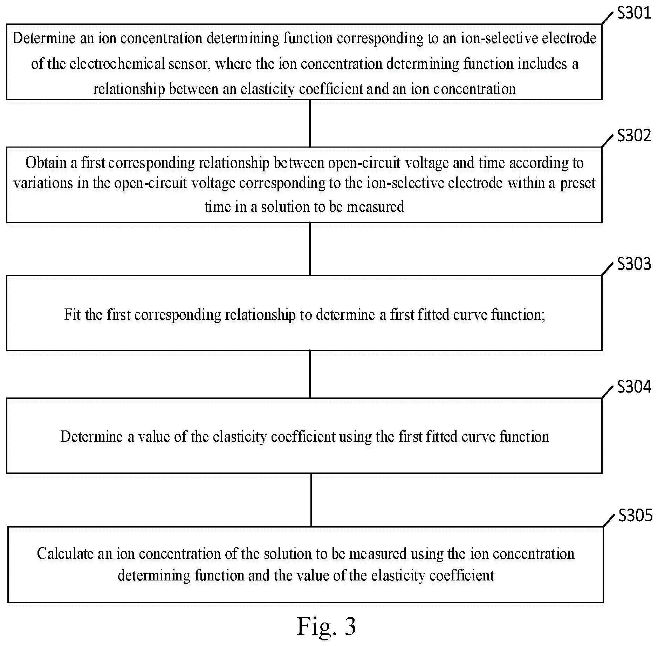

On the basis of the above description, according to one aspect of the present application, a method for detecting ion concentration using an electrochemical sensor is provided. As shown in FIG. 3, the method includes the following steps:
step S301: determining an ion concentration determining function corresponding to an ion-selective electrode of the electrochemical sensor, where the ion concentration determining function includes a relationship between an elasticity coefficient and an ion concentration;
step S302: obtaining a first corresponding relationship between open-circuit voltage and time according to variations in the open-circuit voltage corresponding to the ion-selective electrode within a preset time in a solution to be measured;
step S303: fitting the first corresponding relationship to determine a first fitted curve function;
step S304: determining a value of the elasticity coefficient using the first fitted curve function; and
step S305: calculating an ion concentration of the solution to be measured using the ion concentration determining function and the value of the elasticity coefficient.

In some implementations, in order to rapidly measure the ion concentration, it is required to determine the ion concentration determining function which reflects the relationship between an elasticity coefficient and an ion concentration, and it is also needed to determine an open-circuit voltage variation curve within a preset time after the ion-selective electrode comes into contact with a solution and a first fitted curve function formed by fitting the curve, so as to determine the value of the elasticity coefficient. Finally, the ion concentration of the solution to be measured is calculated using the ion concentration determining function and the value of the elasticity coefficient.

It can be appreciated that steps S301 and S302-S304 may be performed sequentially or simultaneously, which is not limited in the present application.

In some optional embodiments, step S301 of determining the ion concentration determining function may include the steps of:
obtaining a plurality of second corresponding relationships between open-circuit voltage and time correspondingly, according to variations in the open-circuit voltage corresponding to the ion-selective electrode in a plurality of solutions with preset concentrations;
fitting the plurality of second corresponding relationships to obtain a plurality of second fitted curve functions, respectively;
determining a plurality of values of the elasticity coefficient respectively using the second fitted curve functions; and
fitting the values of the elasticity coefficient and corresponding preset concentrations to determine the ion concentration determining function.

In some embodiments, the open-circuit voltage variations corresponding to the electrode may be measured in a plurality of solutions with known concentrations, so as to determine a plurality of corresponding relationships between open-circuit voltage and time. The corresponding relationships are respectively fitted to obtain a plurality of fitted curve functions and a plurality of values of the elasticity coefficient. The values of the elasticity coefficient and the preset concentrations are fitted to determine the ion concentration determining function.

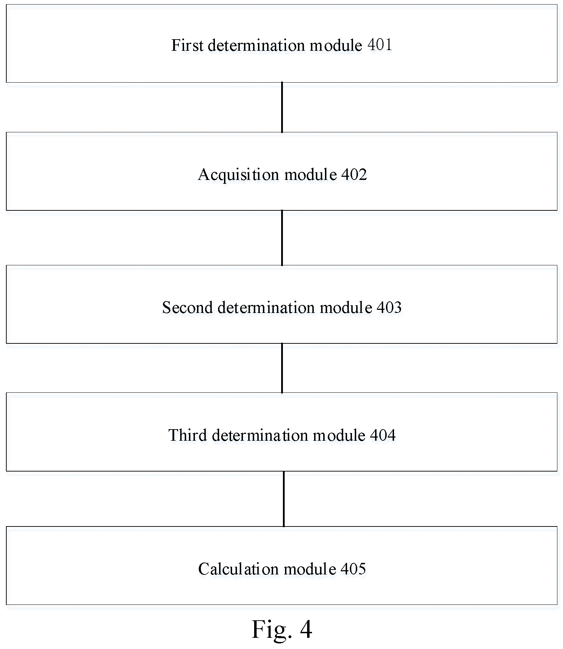

According to another aspect of the present application, a device for detecting ion concentration using an electrochemical sensor is provided. As shown in FIG. 4, the device includes: a first determination module 401, an acquisition module 402, a second determination module 403, a third determination module 404 and a calculation module 405. The first determination module 401 is configured to determine an ion concentration determining function corresponding to an ion-selective electrode of the electrochemical sensor, where the ion concentration determining function includes a relationship between an elasticity coefficient and an ion concentration. The acquisition module 402 is configured to obtain a first corresponding relationship between open-circuit voltage and time according to variations in the open-circuit voltage corresponding to the ion-selective electrode within a preset time in a solution to be measured. The second determination module 403 is configured to fit the first corresponding relationship to determine a first fitted curve function. The third determination module 404 is configured to determine a value of the elasticity coefficient using the first fitted curve function. The calculation module 405 is configured to calculate an ion concentration of the solution to be measured using the ion concentration determining function and the value of the elasticity coefficient.

In some optional embodiments, the first determination module 401 may be configured to:
correspondingly obtain a plurality of second corresponding relationships between open-circuit voltage and time according to variations in the open-circuit voltage corresponding to the ion-selective electrode in a plurality of solutions with preset concentrations;
fit the second corresponding relationships to respectively obtain a plurality of second fitted curve functions;
respectively determine a plurality of values of the elasticity coefficient using the second fitted curve functions; and
fit the values of the elasticity coefficient and the corresponding preset concentrations to determine the ion concentration determining function.

In fact, in addition to ion concentration, there are many other factors that affect the response signal of an electrode. For example, swelling of electrode materials, charge transfer processes, components of electrode materials, ion adsorption capacity on the electrode surface, and ion diffusion rate during ion concentration measurement all affect the final response signal of the electrode. Therefore, calibration with standard solutions is usually required before each measurement to eliminate the influence of these factors. In order to eliminate or minimize the influence of other factors, the present application further optimizes parameters in the electrode preparation process to fix the influence proportion of factors other than ion concentration that affect the electrode response signal, so as to form a strong corresponding relationship between ion concentration and the response signal of the electrode.

In some embodiments, the ion-selective membrane coated on the surface of an ion-selective electrode mainly includes components such as an ionophore, a plasticizer, a surfactant, and a membrane matrix material. To realize ion concentration measurement during the polarization process, the membrane matrix material may be preferably selected, and a polymer material with a low water swelling rate, such as polystyrene, polypropylene, polyamide, polyurethane, and mixtures of such polymer materials, may be used as a matrix. In addition, the mass percentage of the surfactant relative to the ion-selective membrane may be reduced (the conventional concentration is no more than 4%, for example, no more than 1.5%).

In a specific embodiment, in a case where the ion-selective electrode is configured as a calcium ion electrode, the calcium ion-selective membrane coated on the calcium ion electrode may comprise 1.5% of an ionophore by mass; the membrane matrix material may be a mixture of polypropylene and polyurethane at a mass ratio of 2:1; and the amount of the surfactant added may be 1%. Experiments show that the calcium ion-selective permeable membrane has both high calcium ion-selective permeability and low water swelling rate.

In some embodiments, the membrane solution of the ion-selective membrane is coated on the surface of the ion-selective electrode by a controllable deposition manner such as spin coating and blade coating, instead of a discrete method such as drop coating. Precise membrane coating allows effectively control of the membrane thickness and ensures the uniformity of the membrane thickness. Local thickening may also be caused by inconsistent surface volatilization rates during the volatilization of the membrane solution. Technical means such as vacuum drying and nitrogen-filled drying may be adopted to control the ambient gas composition during membrane volatilization, reduce the condensation of water vapor on the membrane surface, and accelerate the volatilization of organic solvents.

In a specific embodiment, in a case where the ion-selective electrode is configured as a calcium ion electrode, a nitrogen-filled spin coating process may be implemented by dropping 10 µL of a membrane solution on the surface of the electrode, followed by spin coating at a rotation speed of 1000 rpm for 1 minute in a dry nitrogen atmosphere. At the end of spin coating, drying is performed in a vacuum oven at 60°C for 1 hour to adequately volatilize the solvent in the membrane solution.

In some embodiments, the post-stabilization potential of the ion electrode is related to the ion concentration of the solution. According to the Nernst equation, electrodes on two sides of the ion-selective membrane in an electrolyte form a battery, and the electromotive force of the battery equals the initial electromotive force of the battery plus the term describing the relationship with the electrolyte concentration. The initial polarization process at the beginning of operation is caused by the imbalance of charge transfer reactions on the surface of the ion-selective electrode, and this deviation is usually related to charge accumulation on the electrode surface. Therefore, reverse voltage is applied to the electrode for 2 to 3 seconds before the initial measurement, so as to eliminate the original initial charge accumulation. After eliminating the initial charge accumulation, pre-calibration tests may be performed on samples of ion-selective membranes prepared in the same batch to obtain the charge accumulation rates of the batch of membranes under different ion concentrations, so as to determine a standard curve for subsequent actual measurements.

According to the solution of the present application, the consistency of the membrane polarization process is improved by optimizing the preparation parameters of the ion-selective membrane. The ion concentration determining function determined from the influence of ion concentration in the variation parameters during the potential polarization process of the electrode can be used to realize detection of the ion concentration in the solution to be measured before the potential is stabilized, thereby greatly improving the response time of the sensor, and achieving the purpose of rapid ion detection.

The embodiments of the present application are described in detail above. Specific embodiments are provided herein to explain the principles and implementations of the present application, and the description of the above embodiments is only used to facilitate understanding of the method and the core idea of the present application. Moreover, any changes or variations made by those skilled in the art based on the idea of the present application with respect to the specific implementations and application scope of the present application shall fall within the scope of the present application. In summary, the content of this specification shall not be construed as limiting the present application.

## Claims

1. A method for detecting ion concentration by using an electrochemical sensor, comprising:
determining an ion concentration determining function corresponding to an ion-selective electrode of the electrochemical sensor, wherein the ion concentration determining function comprises a relationship between an elasticity coefficient and an ion concentration;
obtaining a first corresponding relationship between open-circuit voltage and time according to variations in the open-circuit voltage corresponding to the ion-selective electrode within a preset time in a solution to be measured;
fitting the first corresponding relationship to determine a first fitted curve function;
determining a value of the elasticity coefficient using the first fitted curve function; and
calculating an ion concentration of the solution to be measured using the ion concentration determining function and the value of the elasticity coefficient.

2. The method according to claim 1, wherein the determining an ion concentration determining function corresponding to the ion-selective electrode of the electrochemical sensor comprises:
obtaining a plurality of second corresponding relationships between open-circuit voltage and time correspondingly, according to variations in the open-circuit voltage corresponding to the ion-selective electrode in a plurality of solutions with preset concentrations;
fitting the plurality of second corresponding relationships to obtain a plurality of second fitted curve functions, respectively;
determining a plurality of values of the elasticity coefficient respectively using the second fitted curve functions; and
fitting the values of the elasticity coefficient and corresponding preset concentrations to determine the ion concentration determining function.

3. The method according to claim 2, wherein any one of the first fitted curve function and the plurality of second fitted curve functions is a logarithmic function Y = alnX + b, wherein Y represents open-circuit voltage, X represents time, a represents an elasticity coefficient, and b represents an intercept coefficient, and the ion concentration determining function is an exponential function.

4. An electrochemical sensor, comprising:
a processing unit configured to execute the method according to any one of claims 1 to 3.

5. The electrochemical sensor according to claim 4, further comprising:
an ion-selective electrode; and
an ion-selective membrane formed on a surface of the ion-selective electrode.

6. The electrochemical sensor according to claim 5, wherein the ion-selective membrane comprises a membrane matrix material and a surfactant, the membrane matrix material comprises a polymer material with a low water swelling rate, and a mass percentage of the surfactant relative to the ion-selective membrane is no more than 4%.

7. The electrochemical sensor according to claim 6, wherein the ion-selective electrode is configured as a calcium ion-selective electrode, the ion-selective membrane further comprises 1.5% of an ionophore by mass, the membrane matrix material comprises a mixture of polypropylene and polyurethane at a mass ratio of 2:1, and the mass percentage of the surfactant relative to the ion-selective membrane is 1%.

8. The electrochemical sensor according to claim 5, wherein the ion-selective membrane is formed on the surface of the ion-selective electrode by a step of:
coating the surface of the ion-selective electrode with a membrane solution by a controllable deposition manner, and performing drying in a vacuum or nitrogen-filled environment.

9. The electrochemical sensor according to claim 5, wherein the ion-selective membrane is formed on the surface of the ion-selective electrode by steps of:
dropping 10 µL of a membrane solution on the surface of the ion-selective electrode;
spin coating with the membrane solution at a rotation speed of 1000 rpm for 1 minute in a dry nitrogen atmosphere; and
performing drying at 60°C under vacuum for 1 hour to volatilize a solvent in the membrane solution.

10. A device for detecting ion concentration by using an electrochemical sensor, comprising:
a first determination module configured to determine an ion concentration determining function corresponding to an ion-selective electrode of the electrochemical sensor, wherein the ion concentration determining function comprises a relationship between an elasticity coefficient and an ion concentration;
an acquisition module configured to obtain a first corresponding relationship between open-circuit voltage and time according to variations in the open-circuit voltage corresponding to the ion-selective electrode within a preset time in a solution to be measured;
a second determination module configured to fit the first corresponding relationship to determine a first fitted curve function;
a third determination module is configured to determine a value of the elasticity coefficient using the first fitted curve function; and
a calculation module configured to calculate an ion concentration of the solution to be measured using the ion concentration determining function and the value of the elasticity coefficient.
